Europäisches Patentamt

European Patent Office

Office européen des brevets

(19)

(11) **EP 1 615 369 A1**

(12) **DEMANDE DE BREVET EUROPEEN**

(43) Date de publication:
**11.01.2006 Bulletin 2006/02**

(51) Int Cl.:
*H04L 9/18* (2006.01)

(21) Numéro de dépôt: **05106110.9**

(22) Date de dépôt: **05.07.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **06.07.2004 FR 0451458**

(71) Demandeurs:
• **PROTON WORLD INTERNATIONAL N.V.**
**1930 ZAVENTEM (BE)**
• **STMicroelectronics S.r.l.**
**20041 Agrate Brianza (Milano) (IT)**

(72) Inventeurs:
• **Daemen, Joan**
**3900 Overpelt (BE)**
• **Van Assche, Gilles**
**1030 Bruxelles (BE)**
• **Bertoni, Guido Marco**
**20095 Cusano Milanino (IT)**

(74) Mandataire: **de Beaumont, Michel et al**
**1bis, rue Champollion**
**38000 Grenoble (FR)**

(54) **Chiffrement par blocs du contenu d'une mémoire externe à un processeur**

(57)    L'invention concerne un procédé et élément de chiffrement par un processeur intégré de données à stocker dans une mémoire (4), consistant à appliquer à chaque bloc de données à chiffrer (P) un algorithme de chiffrement (B) fonction d'au moins une clé (K) propre au circuit intégré, et avant d'y appliquer l'algorithme de chiffrement, à combiner le bloc de données à chiffrer avec le résultat d'une fonction (IVGEN) de l'adresse de stockage (A, I) du bloc chiffré (C) dans la mémoire et d'une quantité numérique (R) différente de la clé de chiffrement.

Fig 3

## Description

La présente invention concerne de façon générale le chiffrement ou cryptage de données, de programme ou plus généralement de codes numériques devant être stockés dans une ou plusieurs mémoires, externes à un processeur intégré chargé d'exploiter ces codes.

Un exemple d'application de la présente invention concerne le chiffrement de programmes exécutables téléchargés par un dispositif (ordinateur, lecteur de données vidéo ou audio, appareil pourvu d'un microprocesseur d'exécution de programmables téléchargeables, etc.) dans lequel ces programmes doivent être stockés. Le téléchargement peut, par exemple, faire appel à l'Internet. Plus précisément, la présente invention concerne les programmes ou données pour lesquels on souhaite empêcher qu'un utilisateur non autorisé y accède de façon exploitable.

On fera par la suite référence au terme "données" pour désigner indifféremment n'importe quel code numérique qu'il s'agisse de programmes exécutables, ou de données traitées par ces programmes.

Par externe au processeur intégré, on entend selon l'invention externe à une zone dite sécurisée à l'intérieur de laquelle se trouve une unité centrale de traitement communiquant avec l'extérieur de cette zone sécurisée par un ou plusieurs bus. La mémoire est alors connectée à ce ou ces bus et est donc externe au processeur intégré.

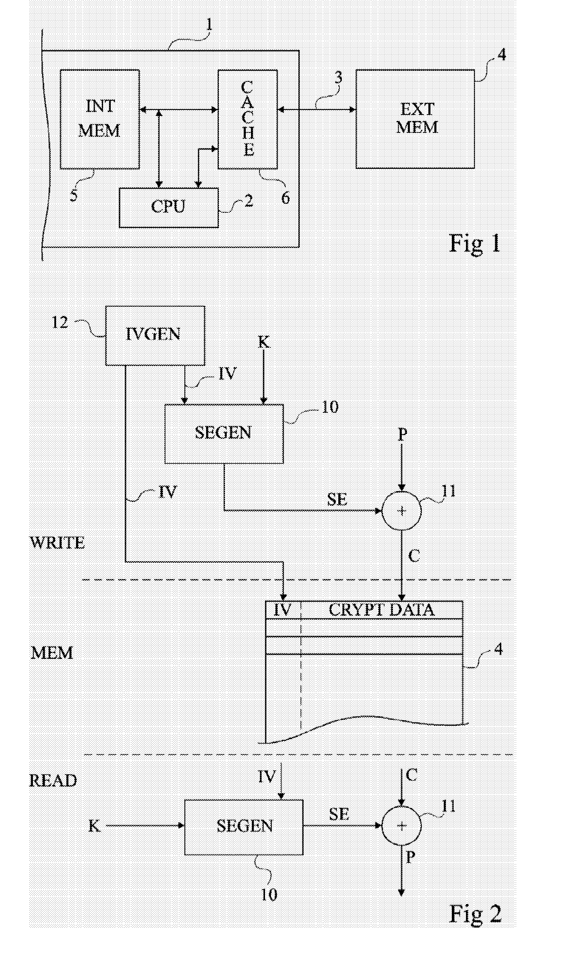

La figure 1 illustre, de façon partielle et très schématique, la structure d'un système à microprocesseur et à mémoire externe auquel s'applique la présente invention. On définit une zone 1 dite sécurisée à l'intérieur de laquelle se trouve une unité centrale de traitement 2 (CPU) communiquant par l'intermédiaire d'un ou plusieurs bus 3 avec une mémoire externe 4 (EXT MEM). La mémoire 4 est généralement une mémoire à accès non séquentiel (aléatoire ou non). La zone 1 est, par exemple, le microprocesseur intégré ou, plus généralement, un ou plusieurs circuits intégrés de traitement de données définissant une zone à l'intérieur de laquelle on considère que les données traitées ne sont pas susceptibles d'être piratées. En pratique, la zone sécurisée 1 est le plus souvent constituée par une unique puce de circuit intégré, la mémoire externe 4 étant une autre puce. Le processeur 2 est associé, dans la zone sécurisée, à une mémoire interne 5 (INT MEM) considérée également comme sûre et exploite une mémoire cache 6 (CACHE) servant d'interface d'entrée-sortie avec le bus 3.

Le chiffrement auquel s'applique la présente invention concerne celui de toutes données transitant sur le ou les bus 3, entre la mémoire 4 et l'unité centrale 2 ou plus généralement la zone 1. Ce chiffrement consiste à coder les données stockées au moyen d'une clé connue par le processeur intégré. Par exemple, cette clé lui est transmise par un processus de chiffrement symétrique ou asymétrique depuis un système distant fournissant le programme, de façon à ce que le processeur la stocke dans une zone interne protégée (par exemple, la mémoire 5), et l'utilise pour décrypter le programme téléchargé et/ou pour chiffrer les données en mémoire externe.

La présente invention concerne plus particulièrement le cas de données qui, lorsqu'elles sont stockées dans la mémoire externe, sont chiffrées au moyen d'une clé qui dépend du circuit intégré et qui se trouve être différente d'une puce à une autre, le cas échéant après personnalisation. Par contre, le chiffrement est indépendant des données elles-mêmes en ce sens qu'il n'est pas nécessaire de connaître les données précédentes ou suivantes de celles en cours de chiffrement pour être capable d'effectuer ce chiffrement.

Un exemple de solution connue pour chiffrer le contenu d'une mémoire externe à un processeur est décrit dans la demande américaine n° US-A-2003-0198344. Cette solution consiste à découper les données par blocs et à chiffrer en continu chaque bloc de données au moyen d'une séquence combinant une clé propre au circuit intégré et un vecteur d'initialisation changeant à chaque bloc de données.

La figure 2 illustre, de façon très schématique et sous forme de blocs, une telle solution. Cette solution est basée sur l'utilisation d'un générateur 10 pseudo aléatoire (SEGEN) fournissant une séquence SE de chiffrement d'un bloc de données P au moyen d'une porte 11 de type OU-Exclusif. La porte 11 fournit un résultat chiffré C, c'est-à-dire un bloc P chiffré au moyen de la séquence SE. La séquence SE fournie par le générateur 10 est basée sur une clé interne K correspondant à une clé propre au microprocesseur et sur un vecteur d'initialisation IV fourni par un générateur 12 (IVGEN). Le générateur 10 est pseudo aléatoire en ce sens que, pour une clé K donnée, il fournit toujours la même séquence SE pour un même vecteur IV d'initialisation. Les grandeurs K et IV sont exploitées par un algorithme de génération de nombres pseudo aléatoires (bloc 10) et sont des mots binaires dont les tailles dépendent de la sécurité souhaitée en terme de nombres de combinaisons possibles. La séquence SE est un mot binaire dont la taille dépend de la taille des blocs à chiffrer. Le flux de blocs C de données est stocké dans la mémoire 4 (MEM). Le vecteur d'initialisation IV généré par le générateur 12 est stocké dans la mémoire 4 en même temps que le bloc crypté C (CRYPT DATA) issu de la porte 11, de façon à pouvoir associer, à chaque bloc stocké, un vecteur d'initialisation qui lui est propre. Ce qui a été décrit ci-dessus correspond à une phase d'écriture (partie haute de la figure 2, WRITE) dans la mémoire 4 (MEM).

Pour déchiffrer (partie basse de la figure 2, READ) des données lues dans la mémoire 4, on fait appel à un générateur pseudo aléatoire 10 de séquences SE identique et à une porte OU-Exclusif 11 identique. Le générateur 10 reçoit d'une part la clé K interne au circuit intégré (processeur) et d'autre part le vecteur d'initialisation IV correspondant au bloc C à déchiffrer, lu dans la mémoire 4.

Une solution telle qu'illustrée par la figure 2 correspond à une solution décrite dans la demande américaine susmentionnée et permet que les données soient chiffrées par une clé propre à la puce de circuit intégré les traitant.

Un premier problème des solutions classiques du type de celle décrite dans cette demande de brevet est lié à la nécessité de stocker les vecteurs d'initialisation. Un tel stockage prend de la place (qu'il soit stocké en externe ou en interne au circuit 1).

Un autre problème est lié au risque dit de collision par la méthode utilisée pour générer les vecteurs d'initialisation IV du générateur de séquences SE. En effet, la probabilité de se trouver en présence de deux vecteurs d'initialisations identiques est fonction de la taille du mot IV généré par le générateur 12. Toutefois, augmenter la longueur de la séquence aléatoire accroît le coût du circuit. En fait, pour un même algorithme de chiffrement (bloc 10), la sécurité du chiffrement repose alors sur la taille du vecteur d'initialisation.

Le document WO-A-02/077825 prévoit de rendre le résultat du chiffrement fonction de la clé de chiffrement, de la donnée et de son adresse mémoire.

Le document EP-A-0 908 810 prévoit de masquer, en amont du chiffrement, les blocs de données à chiffrer avec leurs adresses respectives en mémoire.

Ces solutions rendent un vecteur d'initialisation dépendant de l'adresse du bloc à chiffrer et évitent ainsi le stockage d'un tel vecteur en mémoire. Toutefois, le vecteur d'initialisation est alors déterminable (il n'est plus aléatoire), ce qui fragilise la sécurité du chiffrement.

La présente invention vise à pallier les inconvénients des méthodes connues de chiffrement de contenu d'une mémoire externe à un processeur au moyen d'une clé propre au processeur ou au circuit intégré et d'un vecteur d'initialisation fonction de l'adresse en mémoire du bloc à chiffrer.

La présente invention vise notamment à proposer une solution qui soit compatible avec un chiffrement par blocs.

Pour atteindre ces objets ainsi que d'autres, la présente invention prévoit un procédé de chiffrement par un processeur intégré de données à stocker dans une mémoire, consistant à appliquer à chaque bloc de données à chiffrer un algorithme de chiffrement fonction d'au moins une clé propre au circuit intégré, et avant d'y appliquer l'algorithme de chiffrement, à combiner le bloc de données à chiffrer avec le résultat d'une fonction de l'adresse de stockage du bloc chiffré dans la mémoire et d'une quantité numérique différente de la clé de chiffrement.

Selon un mode de mise en oeuvre de la présente invention, ladite fonction est une fonction linéaire.

Selon un mode de mise en oeuvre de la présente invention, ladite fonction IVGEN est une combinaison linéaire des bits $A_i$ de l'adresse A avec des vecteurs de bits Ri de ladite quantité numérique, respectant la formule suivante :

$$IVGEN(A) = \sum_{i=1}^{n} (A_i * R_i).$$

Selon un mode de mise en oeuvre de la présente invention, lesdits bits de la quantité numérique dépendent de la clé.

Selon un mode de mise en oeuvre de la présente invention, lesdits bits de la quantité numérique sont générés aléatoirement.

Selon un mode de mise en oeuvre de la présente invention, ladite fonction est une fonction réversible de l'adresse.

Selon un mode de mise en oeuvre de la présente invention, la mémoire est divisée au moins en sections dans lesquelles chaque bloc de données chiffré est adressable par un indice, ladite fonction prenant en compte à la fois l'adresse de la section et l'indice du bloc.

L'invention prévoit également un procédé de déchiffrement d'un bloc de données chiffré consistant, avant d'y appliquer un algorithme de déchiffrement, à combiner le bloc de données chiffré avec le résultat de ladite fonction de l'adresse, et d'une quantité numérique différente de la clé de chiffrement.

L'invention prévoit également un ensemble électronique comprenant au moins une mémoire externe à un circuit intégré pourvu d'un processeur, comprenant des moyens pour chiffrer des données à écrire dans la mémoire.

L'invention prévoit également une carte à puce, comprenant un tel ensemble.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 et 2 qui ont été décrites précédemment sont destinées à exposer l'état de la technique et le problème posé ; et
la figure 3 illustre un mode de mise en oeuvre de la présente invention.

Les mêmes éléments ont été désignés par les mêmes références aux différentes figures. Pour des raisons de clarté, seuls les éléments et étapes qui sont utiles à la compréhension de l'invention ont été représentés aux figures et seront décrits par la suite. En particulier, l'algorithme de chiffrement à partir de la clé interne au circuit n'a pas été détaillé, l'invention étant compatible avec n'importe quel algorithme classique de chiffrement par bloc (par exemple, AES, DES).

Une caractéristique de la présente invention est de rendre le vecteur d'initialisation servant au chiffrement dépendant non seulement de l'adresse (quelle que soit sa représentation) à laquelle un mot de données doit être stocké dans la mémoire mais également d'une quantité numérique différente de la clé utilisée par l'algorithme de chiffrement. Ainsi, on évite le stockage de ce vecteur d'initialisation, l'adresse du mot de données dans la mémoire étant connue, tout en évitant de rendre le vecteur d'initialisation déterminable. La quantité numérique est une quantité considérée comme secrète en ce qu'elle est rendue préférentiellement dépendante de la clé de chiffrement ou générée aléatoirement à l'intérieur du circuit. Ainsi, elle est inconnue d'un éventuel fraudeur ne connaissant pas la clé.

De préférence, la mémoire est divisée en sections comprenant chacune plusieurs mots de longueur correspondant chacun, de préférence, à la longueur d'un bloc de chiffrement. Chaque section possède alors une adresse A et chaque position de bloc dans une section a un indice I dont dépend également le vecteur d'initialisation. Connaissant l'adresse et l'indice, il est possible de localiser le bloc de données (le mot) dans la mémoire.

Selon l'invention, le chiffrement est un chiffrement effectué par blocs à la différence du chiffrement en continu de la solution connue de la figure 2. Dans un chiffrement par blocs (block cipher), on applique un algorithme de chiffrement (par exemple, de type DES ou AES) sur le bloc de données alors que dans un chiffrement en continu (stream cipher), on génère une séquence de chiffrement (SE, figure 2) qui masque le flux de données.

Exécuter un chiffrement par blocs présente l'avantage qu'une collision est moins préjudiciable à la sécurité. En effet, dans le cas d'un chiffrement en continu, un problème survient dès qu'un vecteur d'initialisation est identique pour deux données chiffrées, dans la mesure où la séquence de chiffrement est indépendante des données.

A l'inverse, dans le cas d'un chiffrement par blocs, même si le vecteur d'initialisation de deux blocs est le même, on peut déterminer que les données initiales sont identiques mais on est incapable de les connaître. Par conséquent, un chiffrement par blocs permet de supporter des collisions dans les adresses qui conditionnent, selon l'invention, les vecteurs d'initialisation. De plus, l'invention repousse les risques de collision en rendant le vecteur d'initialisation dépendant d'une quantité numérique sécrète autre que la clé de chiffrement.

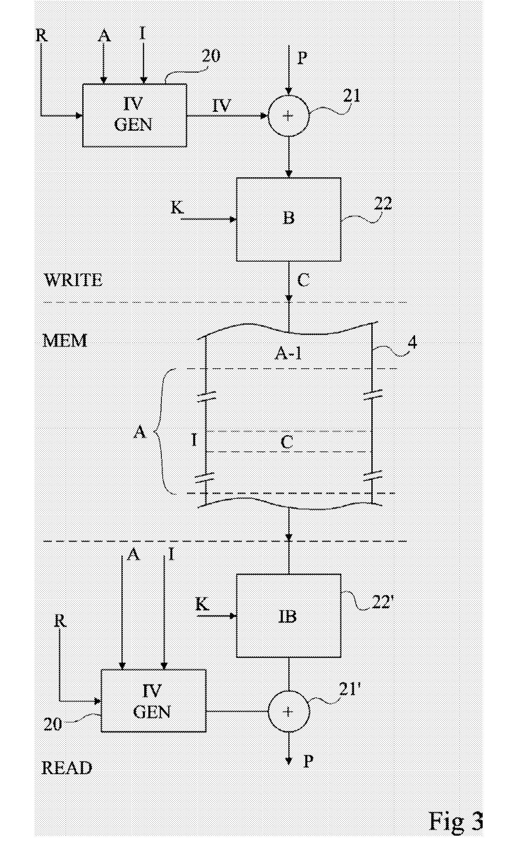

La figure 3 illustre, de façon très schématique, un mode de mise en oeuvre du procédé selon l'invention. Cette figure représente, sous forme de blocs, les éléments ou fonctions du circuit de chiffrement d'un processeur intégré. La mise en oeuvre pratique de ce circuit de chiffrement peut correspondre indifféremment à une réalisation matérielle (logique câblée) ou à une réalisation logicielle (programme exécuté par le processeur intégré).

Comme précédemment, un générateur 20 fournit un vecteur d'initialisation conditionnant le chiffrement. Toutefois, le vecteur d'initialisation IV est ici combiné (par exemple une addition bit à bit, revenant à une combinaison OU-Exclusif - bloc 21) avec un bloc de données P à chiffrer, avant d'appliquer l'algorithme de chiffrement B (bloc 22) proprement dit, basé sur une clé K propre au circuit intégré. S'agissant d'un chiffrement par blocs, la taille du vecteur IV est identique à la taille d'un bloc P. En sortie du bloc 22, on obtient un bloc C de données chiffré à stocker dans la mémoire 4 (MEM). La mémoire externe 4 est divisée en blocs dont les tailles individuelles correspondent aux tailles d'un bloc de l'algorithme de chiffrement (par exemple, 64 bits pour un algorithme de type DES, 128 bits pour un algorithme de type AES, etc.).

Selon l'invention, le vecteur IV est fonction de l'adresse de stockage du bloc de données chiffré et d'une quantité numérique R connue du circuit intégré. Cette quantité R est en pratique un vecteur de bits d'une taille correspondant à la taille du vecteur IV. Ici, les adresses A sont des adresses de sections de la mémoire 4 contenant chacune plusieurs blocs localisables par un index I. Le générateur 20 tient alors compte des adresses A et I.

Dans un mode de réalisation simplifié, l'adresse A de la section représente les bits les plus significatifs (MSB) de l'adresse complète et l'index I représente les bits les moins significatifs (LSB) de l'adresse complète. En variante, n'importe quelle fonction de combinaison peut être utilisée, pourvu qu'elle soit réversible (que A et I permettent la reconstruction de l'adresse complète et vice-versa).

Le flux de mots C est stocké dans la mémoire 4 (MEM). Selon l'invention, aucune autre valeur n'a besoin d'y être stockée. Par conséquent, l'encombrement en mémoire 4 est considérablement réduit.

Ce qui a été décrit ci-dessus correspond à une phase d'écriture (partie haute de la figure 3, WRITE) dans la mémoire 4 (MEM).

Pour déchiffrer (partie basse de la figure 3, READ) des données C lues dans la mémoire 4, on fait appel à un bloc 22' ($IB_K(IV)$) réalisant la fonction inverse par rapport au bloc 22, qui reçoit d'une part la clé K interne au circuit intégré (processeur) et d'autre part le bloc de données chiffré C. En sortie du bloc 22', le résultat est combiné avec un vecteur d'initialisation IV. Le vecteur IV est, selon l'invention, reconstitué d'après la quantité R, l'adresse A de la section et l'index I connus par le processeur, par exemple, au moyen du même générateur 20 que celui du chiffrement.

Le chiffrement revient à appliquer, à chaque mot (bloc) de données P, la formule suivante :

$$C = B_K(P + IVGEN(A, R)),$$

où le symbole + désigne une addition bit à bit (OU-Exclusif bit à bit) et où IVGEN(A, R) correspond au vecteur d'initialisation IV, c'est-à-dire est une fonction prenant en compte l'adresse A de stockage de la donnée C dans la mémoire 4 et la quantité numérique R.

Si la fonction IVGEN prend en compte l'index I, la relation de chiffrement devient :

$$C = B_K(P + IVGEN(A, I, R)).$$

Différentes fonctions peuvent être choisies pourvu qu'appliquées à une même valeur (couple adresse A, quantité R), elles fournissent toujours le même vecteur IV, afin de permettre le déchiffrement. Par exemple, la fonction IVGEN calcule une valeur pseudo aléatoire à partir de l'adresse A et de la quantité R.

Selon un autre exemple, la fonction IVGEN est elle-même une fonction de chiffrement (par exemple, l'algorithme de chiffrement) de l'adresse A avec la quantité R. Dans ce cas :

$$C = B_K(P + B_R(A)).$$

Pour le déchiffrement, la valeur P est réobtenue de la façon suivante :

$$P = IB_K(C) + IVGEN(A).$$

L'exploitation des adresses A et I peut être une simple concaténation (par exemple, l'adresse A représente les bits les plus significatifs (MSB) de l'adresse complète et l'index I représente les bits les moins significatifs (LSB)), ou une fonction plus complexe (de préférence réversible, c'est-à-dire sans perte d'information).

D'autres subdivisions de la mémoire 4 peuvent être prises en compte. Par exemple, on affecte un code de région Z à des sous-ensembles de la mémoire regroupant plusieurs sections localisables par leur adresse A. En utilisant le symbole / pour désigner une concaténation, la fonction de chiffrement complète devient, par exemple :

$$C = B_K(P + IVGEN(Z / A / I)).$$

Par exemple, on effectue une combinaison linéaire de plusieurs constantes avec chacun des bits de l'adresse. Cela revient à appliquer la formule suivante :

$$IVGEN(A) = \sum_{i=1}^{n} (A_i * R_i),$$

où i désigne le rang du bit du mot de n bits constituant l'adresse A, les valeurs $R_i$ étant des vecteurs, par exemple, constitués de constantes générées aléatoirement (par exemple à la mise sous tension) ou avec la clé K en respectant, par exemple, la relation :

$$R_i = B_K(i).$$

Les méthodes appliquant la fonction de l'adresse à la clé ou à la donnée peuvent être combinées.

Il est à noter que l'invention est compatible avec toute méthode classique de fourniture d'une clé à un processeur intégré, l'invention ne participant pas à la génération de cette clé mais se contentant de l'exploiter pour chiffrer les données à stocker en mémoire externe. En particulier, plusieurs clés peuvent être utilisées au sein d'un même circuit et être choisies, par exemple, en fonction de l'application ou de l'utilisateur. De même, la ou les clés peuvent être fournies au circuit intégré par toute méthode classique (système à clé publique, inscription à la fabrication, génération aléatoire à la mise sous tension, etc.).

Des exemples d'algorithmes de chiffrement pouvant être utilisés pour la mise en oeuvre de l'invention sont décrits dans les publications suivantes, leur adaptation éventuelle étant à la portée de l'homme du métier à partir des indications fonctionnelles données ci-dessus :

- FIPS PUB 46-3, Data Encryption Standard (DES), 1999 ; et
- FIPS PUB 197, Advanced Encryption Standard (AES), 2001.

Bien entendu, la présente invention est susceptible de diverses variantes et modifications qui apparaîtront à l'homme de l'art. En particulier, la réalisation pratique de l'invention par une mise en oeuvre matérielle ou logicielle est à la portée de l'homme du métier à partir des indications fonctionnelles données ci-dessus. De plus, d'autres algorithmes de chiffrement que ceux indiqués dans la présente description à titre d'exemple pourront être utilisés. En outre, l'invention est compatible avec un chaînage du bloc chiffré précédent (CBC) où le vecteur d'initialisation est calculé pour le premier bloc d'une section, le bloc chiffré étant combiné avec le bloc à chiffrer suivant. Dans ce cas, une section correspond aux blocs chaînés.

**Revendications**

1. Procédé de chiffrement par un processeur intégré (2) de données à stocker dans une mémoire (4), consistant à appliquer à chaque bloc de données à chiffrer (P) un algorithme de chiffrement (B) fonction d'au moins une clé (K) propre au circuit intégré (1), **caractérisé en ce qu'**il consiste, avant d'y appliquer l'algorithme de chiffrement, à combiner (21) le bloc de données à chiffrer avec le résultat d'une fonction (IVGEN) de l'adresse (A, I) de stockage du bloc chiffré (C) dans la mémoire et d'une quantité numérique différente de la clé de chiffrement.

2. Procédé selon la revendication 1, dans lequel ladite fonction est une fonction linéaire.

**3.** Procédé selon la revendication 2, dans lequel ladite fonction est une combinaison linéaire des bits $A_i$ de l'adresse avec des vecteurs de bits Ri de ladite quantité numérique, respectant la formule suivante :

$$\text{IVGEN}(A) = \sum_{i=1}^{n} \left( A_i * R_i \right).$$

**4.** Procédé selon la revendication 3, dans lequel lesdits bits de la quantité numérique dépendent de la clé (K).

**5.** Procédé selon la revendication 3, dans lequel lesdits bits de la quantité numérique sont générés aléatoirement.

**6.** Procédé selon l'une quelconque des revendications 1 à 5, dans lequel la mémoire (4) est divisée au moins en sections dans lesquelles chaque bloc de données chiffré (C) est adressable par un indice (I), ladite fonction (IVGEN) prenant en compte à la fois l'adresse (A) de la section et l'indice du bloc.

**7.** Procédé de déchiffrement d'un bloc de données chiffré par la mise en oeuvre du procédé selon la revendication 1, **caractérisé en ce qu'**il consiste, avant d'y appliquer un algorithme de déchiffrement (B), à combiner (21') le bloc de données chiffré (C) avec le résultat de ladite fonction (IVGEN) de l'adresse (A, I) et d'une quantité numérique (R) différente de la clé de chiffrement.

**8.** Ensemble électronique comprenant au moins une mémoire (4) externe à un circuit intégré (1) pourvu d'un processeur (2), **caractérisé en ce qu'**il comprend des moyens pour chiffrer des données à écrire dans la mémoire par la mise en oeuvre du procédé selon l'une quelconque des revendications 1 à 7.

**9.** Carte à puce, **caractérisé en ce qu'**elle comprend un ensemble selon la revendication 8.

Fig 1

Fig 2

Fig 3

**Office européen
des brevets**

**RAPPORT DE RECHERCHE EUROPEENNE**

Numéro de la demande

EP 05 10 6110

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | WO 02/077825 A (SCHLUMBERGER SYSTEMES; RHELIMI, ALAIN; BEN AMOR, GHAZI; GUIGNARD, PHIL) 3 octobre 2002 (2002-10-03) <br> * page 3, ligne 22 - ligne 25 * <br> * page 8, ligne 24 - ligne 27 * <br> * page 10, ligne 21 - page 13, ligne 6; figure 5 * <br> ----- | 1,7,8 | H04L9/18 |
| D,A | EP 0 908 810 A (GENERAL INSTRUMENT CORPORATION) 14 avril 1999 (1999-04-14) <br> * alinéa [0026] * <br> * alinéa [0105] * <br> * alinéa [0121] * <br> * alinéa [0134] - alinéa [0135] * <br> * alinéa [0141] * <br> * alinéa [0181] - alinéa [0185] * <br> * alinéa [0188] * <br> * alinéa [0215]; figure 4 * <br> ----- | 1,7,8 | |
| A | US 4 278 837 A (BEST ET AL) 14 juillet 1981 (1981-07-14) <br> * colonne 8, ligne 3 - ligne 46 * <br> ----- | 1,7,8 | DOMAINES TECHNIQUES RECHERCHES (Int.Cl.7) <br> G06F |
| D,A | US 2003/198344 A1 (COURCAMBECK STEPHAN ET AL) 23 octobre 2003 (2003-10-23) <br> * le document en entier * <br> ----- | 1,7,8 | |

Le présent rapport a été établi pour toutes les revendications

| Lieu de la recherche | Date d'achèvement de la recherche | Examinateur |
|---|---|---|
| La Haye | 8 novembre 2005 | Holper, G |

**ANNEXE AU RAPPORT DE RECHERCHE EUROPEENNE**
**RELATIF A LA DEMANDE DE BREVET EUROPEEN NO.**

EP 05 10 6110

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-11-2005

| Document brevet cité<br>au rapport de recherche | | Date de<br>publication | Membre(s) de la<br>famille de brevet(s) | | Date de<br>publication |
|---|---|---|---|---|---|
| WO 02077825 | A | 03-10-2002 | EP<br>FR<br>US | 1388067 A1<br>2822565 A1<br>2004136529 A1 | 11-02-2004<br>27-09-2002<br>15-07-2004 |
| EP 0908810 | A | 14-04-1999 | CA<br>CN<br>IL<br>TW<br>US | 2249554 A1<br>1236132 A<br>126448 A<br>445402 B<br>6061449 A | 10-04-1999<br>24-11-1999<br>14-08-2002<br>11-07-2001<br>09-05-2000 |
| US 4278837 | A | 14-07-1981 | AUCUN | | |
| US 2003198344 | A1 | 23-10-2003 | EP<br>FR | 1355446 A1<br>2838894 A1 | 22-10-2003<br>24-10-2003 |

EPO FORM P0460

Pour tout renseignement concernant cette annexe : voir Journal Officiel de l'Office européen des brevets, No.12/82